# EUROPEAN PATENT APPLICATION

(11) **EP 1 707 435 A1**
(43) Date of publication of application: **04.10.2006**
(21) Application number: 06251725.5
(22) Date of filing: 29.03.2006
(51) Int. Cl.: B60N 2/60

(54) **Seat covers**

(30) Priority: 30.03.2005 GB 0506401
(71) Applicant: Kamtex Krafts Limited, 14 Norman Road Leytonstone London E11 4PX (GB)
(72) Inventor: Mannan, Kamir, Leytonstone London E11 4PX (GB)
(74) Representative: Carstairs, James Campbell

(57) **Abstract**

An adjustable cover for a vehicle seat or for a seat, back or base comprises relatively stiff and inextensible side parts 5a, 5b, 3a, 3b which provide outer finish and are, for example, of leather or simulated leather, and an intermediate part 1a, 2a, connecting the side parts and which intermediate part is relatively flexible and comprises, for example, thin cloth which can readily be folded or crumpled to allow the side parts to be located at less than their maximum separation without the intermediate part presenting a significant thickness, whereby the side parts 5a, 5b, 3a, 3b, in the absence of constraint, can be moved towards and away from one another to an extent accommodated by, for example, folding or crumpling of the intermediate part 1a, 2a. The cover further comprises a secondary panel part 1, 2, likewise providing outer finish and likewise relatively stiff and inextensible as compared with the intermediate part 1a, 2a and which is adapted to fit over and span the flexible intermediate part 1a, 2a, 3a, 3b to overlap the adjoining parts 5a, 5b, 3a, 3b. The secondary panel 1, 2 can be secured to the side parts where it overlaps the latter by means of release securing means such as hook and pile fasteners 7a, 7b, 7c, 7d, 8a, 8b, 8c, 8d, with any of a range of extents of overlap, to fit a range of seat sizes. In a variant, for bench-type seats, the intermediate panel may comprise an intermediate stiff finish panel connected with each side part by a respective flexible side panel, each covered in the fitted cover, by a respective secondary finish panel.

## Description

THIS INVENTION relates to seat covers and is particularly, but not exclusively, applicable to covers for the seats of motor vehicles, such as motor cars.

Car seat covers are well known as accessory items intended to be fitted to the seats of existing vehicles either to protect the seats from wear and soiling or to conceal past wear, soiling or damage to such seats. In order to allow a standard size of such accessory seat cover to be fitted to the seats of a wide range of vehicles, such a seat cover is commonly made of stretch fabric, has a poor fit on many seats and, in use, is not adapted to maintain well any predetermined location on a seat to which it is fitted, but readily slides about over the surface of the seat to which it is fitted, with the result that a person using the seat is also prone to slide about on the seat, to his or her discomfort and possible danger. Furthermore, because of the need to fit a wide range of vehicle seats, such covers are not provided with features, such as surface relief features in the form of upholstery beads or piping or other visible features, which would tend to emphasise and enhance the lines of a seat to which they are fitted, if they fitted such a seat accurately, for if said features happened to be correctly located for a particular size or shape of seat, they would be incorrectly located for other sizes or shapes of seat and would thus detract from the appearance of the latter. As a result, the seat covers at present available are generally less attractive visually and less comfortable than the bare, uncovered, seats of such vehicles when in ex-factory condition.

It is an object of the present invention to provide an improved cover for a seat or a seat part, such as a seat base or seat back, and which avoids the above-noted disadvantages of prior seat covers.

According to the present invention there is provided an adjustable cover for a seat, such a vehicle seat, or for a seat part, e.g. a seat back or seat base, the cover comprising a plurality of parts of which at least one is relatively flexible or extensible and of which some are parts providing outer finish and which are relatively stiff and inextensible as compared with said extensible part or parts, the cover comprising first and second relatively stiff and inextensible parts in the form of side parts adapted to engage opposite sides of such seat or seat parts and an intermediate portion connected to said first and second side parts, said intermediate portion comprising at least one relatively flexible or extensible part whereby said first and second parts in the absence of constraint can be moved towards and away from one another to an extent accommodated by flexing, folding or extension of said relatively flexible or extensible part or parts of said intermediate portion, the cover comprising at least one secondary panel part, likewise providing outer finish and likewise relatively stiff and inextensible as compared with said flexible or extensible part or parts and which is adapted to fit over and span said, or a respective said, flexible or extensible part and to overlap the adjoining said relatively stiff and inextensible parts, and releasable securing means whereby said secondary panel parts can be secured to the relatively inextensible parts on either side of the respective flexible or extensible part whilst said panel part covers that flexible or extensible part, with any of a plurality of selected extents of overlap of the secondary panel part with respect to the last-noted relatively stiff and inextensible parts, whereby the relatively flexible or extensible parts will be covered and concealed and whereby the cover will behave as a substantially inextensible cover of a size determined by the degree of such overlap.

Embodiments of the invention are described below by way of example with reference to the accompanying drawings in which:-
Figure 1 is a perspective view, from the front and one side, of a typical vehicle seat, fitted with covers embodying the present invention;
Figure 2 is a front perspective view of components of the covers used in Figure 1 showing separately back and seat segments with central removable panel parts removed, for purposes of illustration;
Figure 3A is a perspective view of the reverse or inner side of a flexible or extensible middle or intermediate part of the seat back cover or seat base cover of Figures 1 and 2;
Figure 3B shows a bottom view of the seat base cover in Figures 1 and 2;
Figures 4A and 4B are perspective views from the reverse or inner side of the removable panel parts of the seat back cover and the seat base cover in Figures 1 and 2;
Figure 5A is a perspective view from the rear and one side of the seat of Figure 1 with the headrest omitted;
Figure 5B is a perspective view similar to Figure 5A but with part of the seat back cover omitted for purposes of illustration;
Figure 6 is a perspective view, from the front, of a bench-type vehicle seat, such as a car rear seat, with the seat back and seat base fitted with covers in accordance with the invention;
Figure 7 is a front perspective view of components of the covers of the seat of Figure 6, showing separately the back and seat segments with the central removable panel parts removed for the purposes of illustration;
Figures 8A and 8B are perspective views, from the reverse or inner side, of the removable panel parts of the seat back cover and the seat base cover in Figures 6 and 7;
Figure 9 is a perspective view, from the front, of a bench-type vehicle seat fitted with covers embodying the invention;
Figure 9B is a perspective view from the reverse or inner side of the removable panel part of the seat back cover in figure 9;
Figure 9C is a perspective view, similar to Figure 9 of a smaller bench-type vehicle seat fitted with the cover of Figure 9, but with removable parts of that cover omitted, or
Figure 9D is a perspective view similar to figure 9 and 9C, of a bench-type vehicle seat fitted with the cover of Figure 9, but with different parts of that cover omitted, as compared with Figure 9C,
Figure 10A shows a front perspective view of a headrest of a vehicle seat, the headrest being fitted with a cover according to the present invention;
Figure 10B shows a perspective view of the same headrest, fitted with the same cover, from the rear;
Figure 11A is a front perspective view of the headrest cover used in Figure 10A and 10B, with the removable middle or intermediate parts removed;
Figure 11B is a rear view of the headrest cover of Figure 11A, with the middle removable panel again removed;
Figure 12 illustrates the inner circular frame and bottle-shaped side panels for the headrest cover of Figures 11A and 11 B;
Figure 13 shows a perspective view, from the reverse, inner side, of the removable middle or intermediate panel part of the headrest; and
Figure 14 shows a rear perspective view of the headrest with the cover partly undone.

### DESCRIPTION OF THE PREFERRED EMBODIMENTS

Referring to the drawings, these illustrate various covers in accordance with the invention fitted to, or for fitting to, various kinds of motor car seat or to parts of such seats. Each of the covers shown is made in at least two parts, including an adjustable primary cover and a detachable secondary panel.

### FRONT SEATS

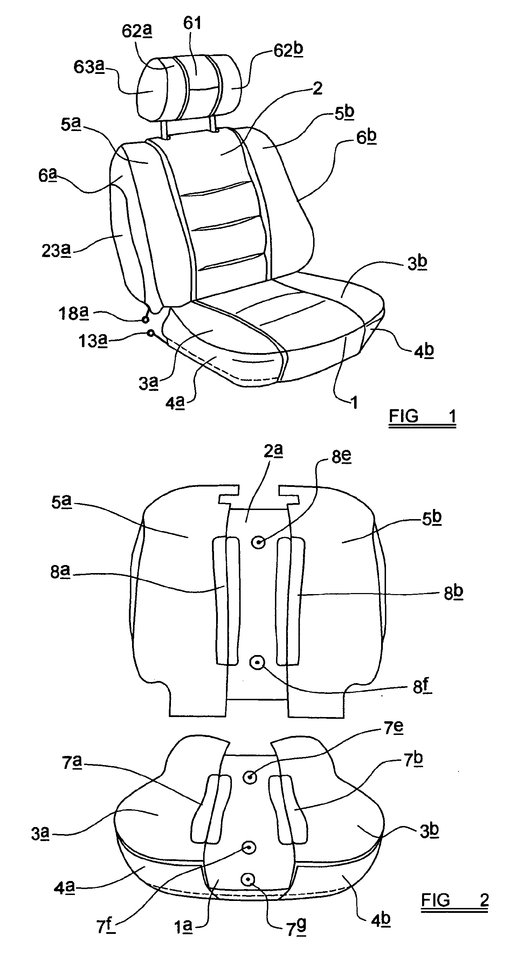

Referring to Figures 1 to 5B, FIG. 1 illustrates a typical single, individual front seat of a motor car, the seat being fitted with covers embodying the invention. The seat comprises a seat base (lower part) and a seat back (upper part) and a headrest, all fitted with respective covers. Each of these covers comprises what is herein referred to, for convenience, as a primary cover, and a removable panel, herein referred to, for convenience, as a secondary panel, which is detachably fitted over the primary cover.

FIG. 2 shows, in their "as fitted" position, but without any of the structure of the seat itself, the seat base cover and the seat back cover of Figure 1, minus the secondary panels. The seat base primary cover comprises side parts 3a,4a, and 3b,4b, and the seat back primary cover comprises side parts 5a,6a, and 5b,6b, The parts 3a,4a,3b,4b,5a,6a,5b and 6b are of relatively stiff and inextensible material, and may, for example, comprise an outer layer of leather, vinyl sheet or polyurethane sheet with an inner plastic foam layer or backing, the pieces making up each side part preferably being stitched together using conventional upholstery techniques.

In the seat base cover of Figure 2, the side parts 3a,4a and 3b,4b are connected by a middle web 1a of thin flexible material, such as cotton fabric, of a width which is somewhat greater than the typical spacing between the adjacent edges of the side parts 3a,3b when the seat base cover is fitted to the seat base of a typical single or individual seat in a motor car. Likewise, in the seat back cover of Figure 2, the side parts 5a,6a and 5b,6b are connected by a primary panel 2a of thin flexible material, such as cotton fabric, of a width which is somewhat greater than the typical spacing between the adjacent edges of the side parts 5a,5b when the seat back cover is fitted to the seat back of a typical single or individual car seat. The webs 1 a and 2a are also referred to herein as primary middle or intermediate panels.

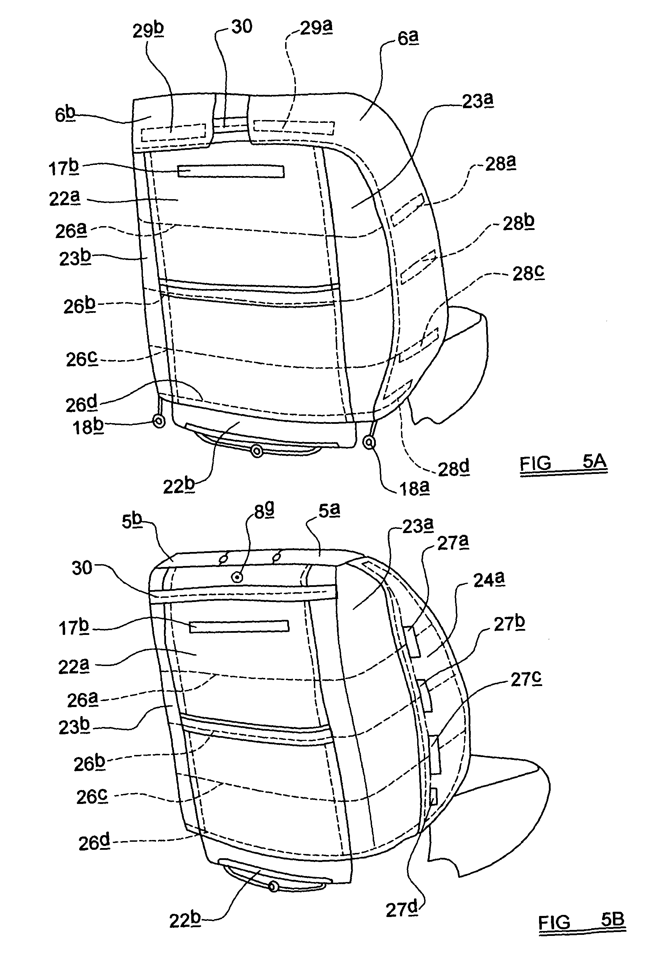

On the outwardly facing surface of each of the seat base cover and seat back cover, in the region of the junction of the respective side part with the respective primary middle panel, are provided fastening means for cooperation with complementary fastening means provided on the inner surface of the respective secondary panel. Thus, as illustrated, strips 7a,7b of the matted fibre portions of hook pile and matted fibre fastening means, such as Velcro (RTM) may be secured to each side part panel 3a, 3b and/or to the primary panel 1 a along the respective seam connecting the side part panel 3a,3b with the primary middle panel 1 a and strips 7c,7d (see Figure 4A) of complementary hook pile portions of such fastening means secured to the inner surface of the secondary panel 1. Likewise, strips 8a,8b of the matted fibre portions of such hook pile and matted fibre fastening means may be secured to each side part panel 5a, 5b and or to the primary middle panel 2a along the respective seam connecting the panel 5a,5b with the panel 2a, and strips 8c,8d (see Figure 4B) of complementary hook pile portions of such fastening means secured to the inner surface of the secondary panel 2. (Alternatively, of course, the hook pile portions of the hook pile and matted fibre fastening means may be secured to the side parts and/or to the primary panels and the matted fibre portions secured to the inner surfaces of the secondary panels).

In the middle of the primary panel 1 a, further fasteners 7e, 7f, 7g such as press stud fasteners or snap fasteners may be provided for cooperation with complementary fasteners 7h, 7l,7j (see Figure 4A) on the inner surface of the secondary panel 1, in the middle of the latter. Likewise In the middle of the primary panel 2a, further fasteners 8e, 8f such as press stud or snap fasteners may be provided for cooperation with complementary fasteners 8h,8i,8j (see Figure 4B) on the inner surface of the secondary panel 2, in the middle of the latter.

The inner side of the primary middle panel 1a (or equally of the primary middle panel 2a) is shown schematically in Fig 3A in which the respective side parts 3a, 4a; 3b, 4b; 5a, 6a; 5b, 6b are omitted for ease of illustration. Tubular piping 9a and 9b as shown by the dotted lines is stitched at the bottom and top of the cloth primary middle panel. Four cloth loops 11 a, 11 b, 11c, 11 d are stitched to the sides of the primary panel 1a, 2a (i.e. adjacent the seams connected with the adjacent side panels 3a, 3b or 5a, 5b (not shown) at equal distances and three plastic rings 12a, 12b, 12c are stitched to the centre of the primary panel 1 a, 2a as shown in Fig 3A. An elastic cord 10 (e.g. bungee type cord or "shock cord") is passed through the tubular piping and is laced through the loops and the rings 10. Preferably the elastic cord is looped around each ring, so that, for example, it passes from ring 12a to loop 11 b, to ring 12b, to loop 11 d, to ring 12c etc., in zigzag fashion, so that the shock cord tends to centralize the middle of the primary middle panel 1 a or 2a and thus the rings 12 and fasteners 7e, 7f, 7g on the opposite surface of the panel 1a or 2a between the longitudinal edges of the bearing the loops 11. In the unstressed condition of the cord 10, the adjacent edges of the respective side panels 3a,3b or 5a,5b are closer than they are when the cloth of the primary panel is fully extended, i.e. in the unstressed condition of the cord 10, the cloth of the middle panel 1 a or 2a is folded or crumpled somewhat. The cord 10, by stretching, allows the primary covers to adjust by expanding or contracting to fit the vehicle seat as required. The seat base primary cover and the seat back primary cover for a single (front) car seat such as shown in Fig. 1 is preferably capable of adjusting in width by approximately by 10 inches in the preferred embodiment. Those skilled in the art will recognize that the range of adjustment widthwise for the base cover or the back cover may be increased or decreased as required by increasing or decreasing the width of the cloth middle panel 1a, 2a and secondary middle panel 1, 2 respectively. The cloth loops 11 and rings 12 may, of course, be replaced by other means such as metal rings, different types of elastic, or cotton cord. Loops of other material at different positions may also be used. Other fastening means can also be used such as snaps, buttons, or even RTM. type strips of material (hook and loop fastening material).

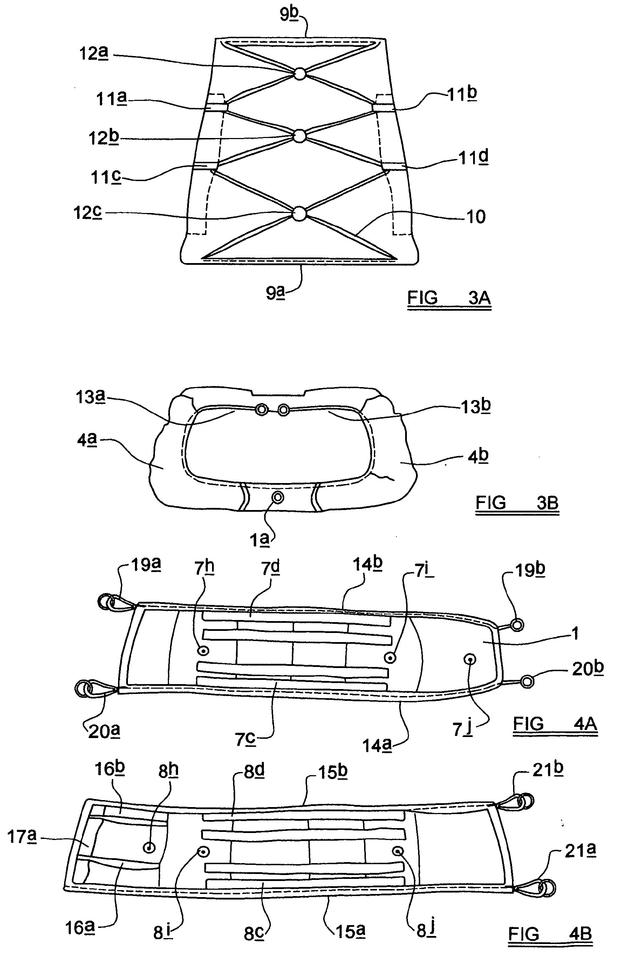

Fig 3B illustrates the bottom view of the front seat base cover, in the position which it occupies when fitted to a seat base. The lower, (outer) edge of portion of the seat base cover shown in Figure 2 is elasticated by running an elastic cord through tubular piping sewn along the lower edges of the side part panels 4a and 4b and the front lower edge of the cloth primary panel 1 a, as shown by the dotted lines in FIG 3B. The opposite ends of the elastic cord are fastened together under the vehicle seat base by means of a ring and hook 13a and 13b at opposite ends of the cord. The cover, when thus fitted, provides a stabilized and firm contour on each side. The cloth middle panel 1 a, being thin and flexible can fold or crumple readily as the elastic cord draws the side portions 3a,4a and 3b,4b together, allowing the cover to adjust to fit widthwise various sizes of vehicle seat, whilst the elastic cord keeps the primary covers firmly in place.

The cushioned secondary panels 1 and 2 are, like the side parts 3a,4a; 3b,4b;5a,6a;5b,6b, made of leather (or polyurethane or vinyl sheet material, for instance) and plastics foam stitched together for added comfort and stability. As described below, the secondary middle panel of the seat base cover or the seat back cover can be readily secured to and detached from the primary cover part 3a, 3b or 5a, 5b. As shown in FIG 4 A the inner surface of the removable secondary middle panel 1 for the seat base has tubular piping 14(a, b) sewn along the longitudinal edges of the secondary panel and elastic cord (bungee type cord), 19,20, is passed through the tubular piping as shown by the dotted lines. One end 19a, 20a of each cord 19,20 respectively is stitched to the respective corners of the secondary panel forming a loop and the other end 19b, 20b of each cord 19, 20 is fastened directly to a plastic ring or other fastening device which can be readily secured to the other end of the respective cord 19,20. Two strips of the hook pile component or of the matted fibre component (whichever is complementary to the components 7a,7b on the primary seat base cover), are stitched to the regions of the secondary middle panel 1 adjacent the longitudinal edges of the latter, on the inner surface of the secondary panel. These allow the secondary middle panel to be fastened to the receiving primary cover by engagement with strips 7a, 7b. Similarly three press stud or snap fastener components 7h, 7i and 7j are stitched to the middle of the secondary middle panel for engagement with the corresponding fasteners 7e, 7f, 7g on the cloth panel 1a as shown in Fig 2.

Fig 4B is a view of the internal surface of the removable cushioned secondary panel 2 for the seat back cover. This panel has, at its end which is destined to be at the top of the seat back, longitudinal slits 16a,16b extending from said end, to receive the headrest pillars, these slits being fitted with open-ended zip fasteners which end somewhat short of the closed ends of these slits. This allows the panel 2 to be fitted over the top of the vehicle seat back without removing the headrest pillars from the seat. Lengths of tubular piping 15a and 15b are sewn along the longitudinal edges of the panel 2 and through each of these lengths of tubular piping, a respective length 21a and 21 b of elastic cord (bungee cord) is passed, as shown by the dotted line. One end of each bungee cord 21a, 21 b is stitched to a respective one of the two upper (as fitted) corners of the panel, whilst the cord, adjacent its opposite end, emerges from the piping at the lower (as fitted) end of the panel 2 and forms an exposed loop, with the extreme end of the cord at the end of that loop being stitched to the adjacent corner of the panel 2. Two strips 8c and 8d of the hook pile component or of the matted fibre component (whichever is complementary to the components 8a,8b on the primary seat back cover), are stitched to the regions of the secondary panel adjacent the longitudinal edges of the latter, on the inner surface of the panel. These allow the panel 2 to be fastened to the receiving primary cover by engagement with strips 8a, 8b. Similarly three press stud or snap fastener components 8h, 8i and 8j are stitched to the middle of the panel 2 for engagement with the corresponding fasteners 8e, 8f, 8g shown in Fig 2.

The panels 1 and 2 when fitted over their respective primary covers on the vehicle seat are secured not only by means of the Velcro fastening means and press stud or snap fasteners, but also by fitting the loops or rings 19a, 20a; 19b, 20b; 21 a, 21 b to hooks or other fastening means under the seat. The loops can be stretched to adjust the tension of the bungee cord running through the tubular piping 14(a, b) and 15 (a, b) allowing the removable secondary panels and primary covers to stay firmly in place, absorbing body weight and movement pressure. The removable cushioned secondary panels 1 and 2 act to provide vertical and lateral resistance, especially when a driver or passenger is entering or leaving the vehicle, preventing unnecessary and unwanted movement of the base cover itself and keeping it stable.

FIG. 5 A shows a perspective view of the cover for the seat back of Figure 1. The primary cover for the seat back of a single seat, such as the seat of Figure 1, has the general form of a tube or bag which is pulled over the seat back from the top and which (in the case of a seat of the form of that of Figure 1 having a headrest), has an opening at the upper end through which the headrest and the headrest pillars can pass. The front part of this primary cover, as described above, comprises the cloth middle panel 2a and the panels 5a, 6a, of leather or simulated leather for example. The rear part of this primary cover can be seen in Figs 5A and 5B. This cover includes, as shown, a rear midsection 22a, a lower panel 22b and rear side panels 23(a, b) which are made by leather or simulated leather, for example in vinyl or polyurethane sheet, or like material. The rear midsection 22a may be foam backed and may provide a pocket. However, those skilled in the art will recognize that a foam backed or pocket section may be added to the rear midsection 22 in one or more pieces of different design and colour or that the pocket could be omitted altogether. The side panels 23 (a, b) are stitched along their inner sides to the adjoining side edges of the midsection 22 and are stitched along their outer side edges to adjoining edges of respective panels 24a, 24b of cotton cloth, (as shown by the shaded area in FIG. 5B), which panels 24a, 24b of cotton cloth are stitched along their opposite edges to the outer edges of the side panels 5a, 5b. Thus the side panels 6a,6b are secured to the panels 5a,5b respectively along substantially the same seams as the panels 24a, 24b, so that the side panels 6a,6b are effectively flaps extending from the wall of the tubular body or bag referred to. The continuation of the edge of each side panel 6a,6b which is stitched to the side of the respective panel 5a,5b is stitched to the top of edge of the respective panel 5a, 5b. In Fig. 5B the side panels 6(a, b) are omitted for purposes of illustration.

In order to allow the rear cover to adjust horizontally (circumferentially) to different seat widths, four horizontal tubular piping sections 26 (a, b, c, d) are stitched at equal distances over the inner side of each side panel 23(a, b) and rear midsection panel 22 as shown by the dotted line in FIG.5B. Elastic cord (bungee or shock cord, for example), is passed through the tubular piping 26 (a, b, c, d) with each end of each cord fastened to the respective front panel 5a or 5b. Four Velcro strips of approximately 4 inches wide are stitched to the sides of the cloth panel 24a at points 27a, 27b, 27c, 27d and to the sides of cloth panel 24b at points 27c, 27d, 27e, 27f. The cloth side panels 24(a, b) are covered by the respective side panels 6(a, b) which again are made of relatively stiff material such as foam-backed vinyl or polyurethane sheet to provide an acceptable visual appearance. Four Velcro strips approximately 6 inches long are stitched horizontally to the inner side of the side panel 6a at points 28(a, b, c, d) and to the inner side of the side panel 6b at points 28(e, f, g, h). This allows the rear and side of the cover to adjust horizontally i.e. allows the cover to contract and expand, e.g. by approximately 12 inches. Thus, after the front cover for the seat back has been placed over the seat back, the Velcro fastener parts 27(a, b, c, d) can be fastened to the complementary Velcro fastener parts 28(a, b, c, d,) and the Velcro fastener parts 27(e, f, g, h) fastened to the complementary Velcro fastener parts 28(e, f, g, h), to keep the cover fitting closely to the seat back.

The side panels 6(a, b) have, at their free edges, tubular piping through which an elastic cord 18 (bungee type) is passed, joining the two side panels 6a and 6b together, with each end of the cords being fastened to a respective ring 18(a, b) at the lower end of the panel 6a or 6b. These rings or loops 18(a, b) when fastened together under the vehicle seat by means of hooks or other fastening devices as mentioned above allow the cover to adjust vertically. As shown in Figure 5A, the upper ends of the side panels 6(a, b) are then secured to the rear mid section 22a by means of Velcro or other fastening means, stitched to the inner sides of the panels 6(a, b) at locations 29(a, b), cooperating with complementary Velcro fastening means 30 stitched to the rear mid section 22a as shown in Fig 5B, thus keeping the front and rear of the primary cover for the seat back firmly in place. This also allows the primary seat base cover and the primary seat back cover front cover to be joined together and at the same time to function independently from each other while the covers are adjusted horizontally. Finally the lower panel 22b has a hardened wire placed at the bottom of the panel as shown by the dotted lines, with an elastic loop 22e, which, when fastened to the bottom of the vehicle seat, keeps the back cover and pocket firmly in place with respect to the seat.

In fitting the covers of Figs 1 to 4 to a single, e.g. front seat, of a motor car, the primary covers 3a, 4a; 3b, 4b; 5a, 6a; 5b, 6b are fitted to the seat base and seat back. The secondary middle panel 1 for the seat base is fitted and the elastic cords 19,20 secured by the fasteners 19a, 19b; 20a, 20b at their ends. The secondary panel 2 for the seat back is then fitted, passing the region at the upper end, between the slit 16a, 16b, between the headrest pillars, with associated zips undone, and the parts on the outsides of these slits being passed on the outsides of the headrest pillars. The last-mentioned zips are then done up and closed. The free end of panel 2 having the slits 16a, 16b is also provided, on the inner surface of the panel, with a transverse Velcro strip 17a, for engagement with a complementary Velcro strip 17b on the rear part of the primary cover, (see Figures 5A and 5B). The Velcro strips 17a and 17b could, of course, be partially or wholly replaced by other types of fastening means such as snap buttons or hooks.

The panel 24a of the cover shown in Figure 5A for the front seat could be partially or wholly omitted or secured by readily ruptured stitching or the like so as not to impede the operation of seat side airbags, where these are fitted. This panel could also be made in other flexible material. The elasticated pipings 26a, 26b, 26c, 26d could also be partially omitted or could be reduced to two or three in number. For example, in some embodiments, only the elasticated pipings 26a and 26d might be used.

### REAR SEATS

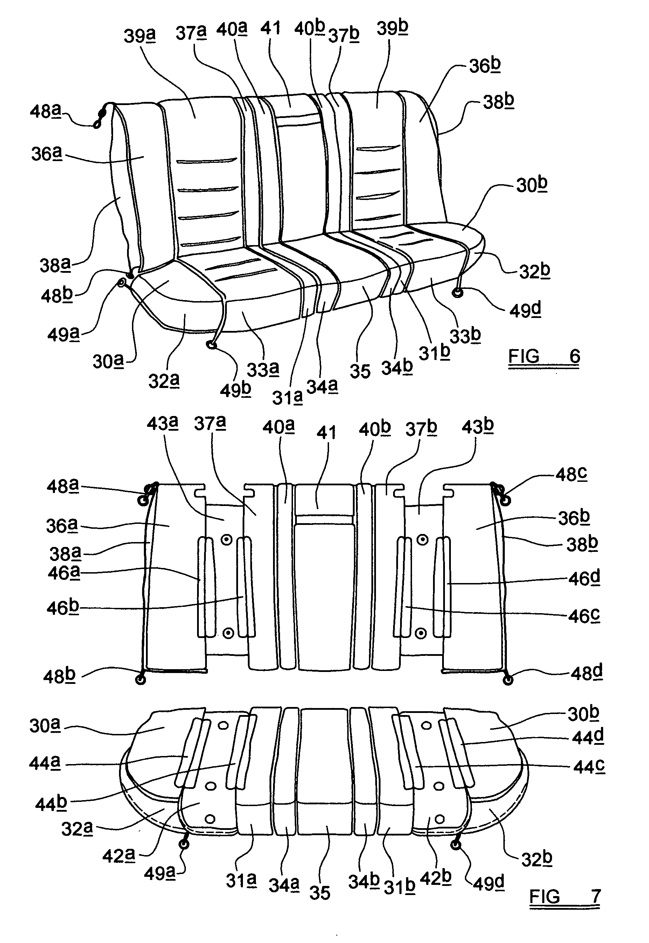

FIG 6 illustrates a front perspective view of the rear seat of a motor car, the seat being of the typical bench type and being fitted with a cover arrangement embodying the invention. Again, the cover arrangement embodying the invention comprises a seat base cover and a seat back cover. The seat base cover is illustrated with side parts 30a, 32a and 30b, 32b; intermediate parts 31 a, 31 b, 34a, 34b and 35 which may be regarded as respective exposed, outer finish parts of the primary seat base cover, and with detachable secondary panels 33a and 33b. Similarly, the seat back cover is illustrated with side parts 36a, 38a and 36b, 38b; intermediate parts 37a, 37b, 40a, 40b and 41 which may be regarded as respective exposed, outer finish parts of the primary seat back cover, and with detachable secondary panels 39a and 39b. It should be noted that the side panels 38b and 32b are identical to, or rather mirror images of, the side panels 38a and 32a shown in Fig 6.

In the preferred embodiment, the parts 30(a, b); 36(a, b); 33(a, b) and 39(a, b) comprise pieces of foam-backed vinyl or polyurethane imitation leather, (or real leather), stitched together at their edges. Various other types of sheet material leather or fabric may, of course, be used. Those skilled in the art will recognize that these parts may be made in one or more pieces of vinyl polyurethane sheet or leather with or without foam backing.

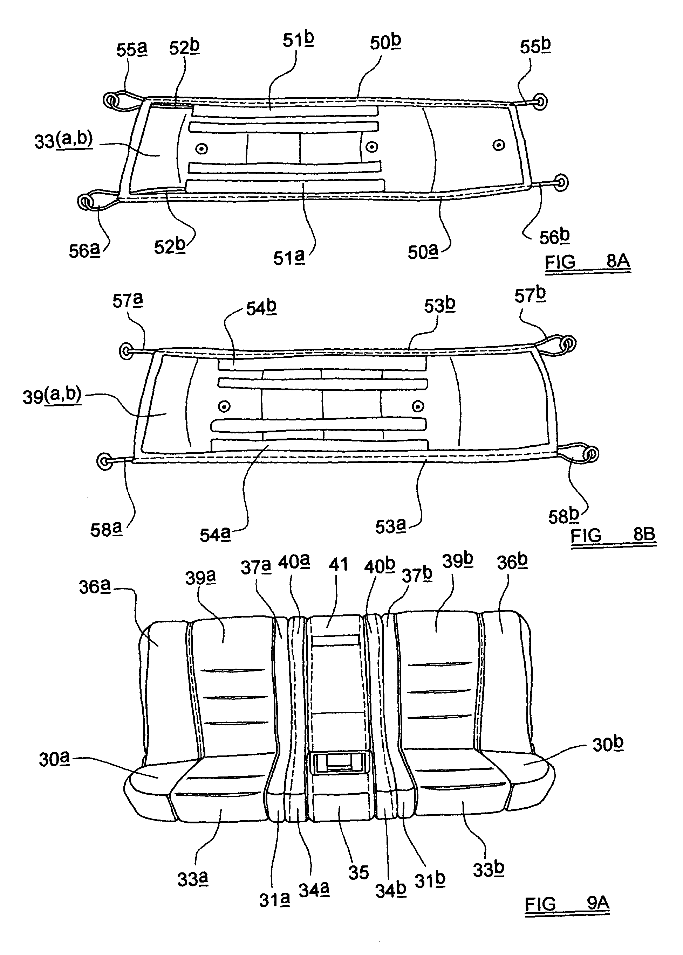

Fig. 7 shows a front perspective view of the seat base cover and seat back cover of Figure 6 with the detachable secondary panels 33(a, b) and 39(a, b) omitted in order to illustrate the covers' ability to expand and contract to adjust to the vehicle seat as required. The middle section of the seat base cover includes a cotton cloth panels 42(a, b) and middle section of the seat back cover includes a cotton cloth panels 43(a, b). Each such cotton panel may be approximately 13 inches wide. Each panel 42a or 42b is stitched at one side to the panel 30a or 30b and stitched at its other side to the panel 31a or 31 b. Likewise, each panel 43a or 43b is stitched at one side to the panel 36a or 36b and stitched at its other side to the panel 37a or 37b. Velcro strips 44(a, b, c, d) about 1 inch thick and 15 inch long are stitched to the seat base primary cover adjacent the junctions of the panels 42a and 42b with the adjacent panels. Likewise Velcro strips 46(a, b, c, d) about 1 inch thick and 15 inch long are stitched to the seat back primary cover adjacent the junctions of the panels 43a and 43b with the adjacent panels. Three tich buttons (press stud fasteners or snap fasteners) are fitted at locations in the centre of each cloth panel 42a and 42 b and two tich buttons (press stud fasteners or snap fasteners) are fitted at locations in the centre of each cloth 43a and 43b as shown by the circles in Fig 7. The Velcro and tich buttons are used to fasten the removable secondary panels. It should be noted that different size Velcro and tich buttons at different positions can be used to secure the removable secondary panels, other fastening means such as snaps, hooks, button hooks or any other fastening means may also be used or fasteners additional to the Velcro strips may be dispensed with altogether. The inner side of the cloth panels 42 (a, b) for the seat base cover and of the cloth panels 43(a, b) for the seat back cover are made in exactly the same way as explained earlier with reference to Fig 3. The side panel 32(a, b) for the seat and 38 (a, b) for the back are provided with tubular piping through which elastic bungee type cord is passed (shown by the dotted lines) with the end of the cord fastened to plastic or metal rings forming loops 48(a, b) (for the back cover) and loops 49(a, b) (for the seat base cover). Opposite such loops, when fastened together under the vehicle seat by means of hooks or other fastening devices as mentioned above allow the cover to adjust vertically from the side as required. The primary covers for the seat back and seat base in figures 6 and 7 may be capable of adjusting laterally by approximately 24 inches in the preferred embodiment. Those skilled in the art will recognize that the adjusting width for the cover arrangement for the seat back, like that for the seat base, may be increased or decreased as required by increasing or decreasing the width of the cloth panels 42(a, b), 43(a, b) and the secondary panels 33(a, b), 39(a, b).

Referring now to FIG.8A, this illustrates the inner surface of either of the removable secondary panels 33(a, b) for the seat base. This panel is very similar to that of Figure 4 and has tubular piping 50(a, b) sewn along the edges of the panel through which an elastic bungee type cord is passed as shown by the dotted lines. One end of each bungee cord 55a and 56a is stitched to the respective comer at one end of the panel, forming a respective loop and the other ends of the bungee cords 55b and 56b are fastened directly to plastic rings or any other fastening devices. Two Velcro strips about 1 inch wide and 18 inch long are stitched 1 inch apart to the corners of panel 33(a, b) at points 51a and 51 b allowing the panel to be fastened to the receiving primary cover for the seat base, at Velcro strips 44(a, b) and 44 (c, d). Similarly three tich buttons (press stud fasteners) are stitched at the centre of the secondary panel allowing the panel to be fastened to the complementary fasteners on the receiving primary cover for the seat base, as shown in Fig 7. As shown in FIG.8A the panel 33(a, b) has hardened wire inserts 52 (a, b), (or other similar means such as plastic flexible rods or wire mesh), attached to the upper side of the panel with tubular piping . This allows the removable panel to be bent according to the shape and contours of the rear seat, retaining its bent shape thereafter.

Referring to FIG. 8B, this illustrates the inner surface of the removable panel 39(a, b) for the seat back cover. This panel is similar to that of Figure 4 and has similar tubular piping 53(a, b) at the edges with elastic bungee cord passed through the piping with loops 57a and 58a and rings 57b and 58b at the ends of the elastic cord. Similar Velcro strips are fastened at locations 54(a, b) and two tich buttons (press stud or snap fasteners) are fixed at the centre of the panels (shown by the circles in Fig 8B), allowing the panel to be fastened to the receiving primary cover for the seat back at locations 46(a, b) and 46(c, d). The panels 33(a, b) and 39(a, b) when placed over a vehicle seat fitted with the seat base cover, are not only secured to the primary cover by means of the Velcro and tich buttons referred to, but are also secured to the vehicle seat by fastening the loops 55a and 56a for panel 33 and loops 57a, 58a for panels 39 to the rings 55b, 56b and 57b, 58b respectively, for example by means of hooks or other fastening means under the seat. The loops can be stretched to adjust the tension of the bungee cord running through the tubular piping 50(a, b) and 53 (a, b) securing the removable secondary panels of the seat base cover and seat back cover firmly in place, absorbing body weight and movement pressure. The removable cushioned panels 33(a, b) and 39(a, b) act to provide vertical and lateral resistance, especially when a driver or passenger is entering or leaving the vehicle, preventing unnecessary and unwanted movement of the seat cover itself and keeping it stable.

The mid section (34a, 34b, 35) of the seat base cover shown in FIG.9A, and the mid section (40a, 40b, 51) of the seat back cover are made to accommodate split or folding rear seat bases and backs for different types of vehicle rear seats, with the option to use a back arm rest and to be able to further reduce the width of the cover horizontally to fit different types of smaller seats. To this end the mid section 34a, 34b, 35 is connected by zips (shown by the dotted lines in FIG.9A), stitched to the sides of the mid section panels 34 (a, b) of the seat base and to insides of the mid section panels 40 (a, b) of the seat the back joining panels 31(a, b) and 35 for the seat base and panels 37(a, b), 41 for the seat back. Fig 9B illustrates the inner surface of the mid section panel 41 for the seat back cover. Velcro strips 59a and 59b approximately 18 inches long are stitched to the lower sides of the panel. Complementary Velcro strips 59c and 59d are joined to the Velcro strips 59a and 59b respectively. The zips 60a and 60b from panels 40a and 40b respectively are partly fastened to the upper side of the mid section panel and the remainder these zips is stitched to the Velcro strips 59c and 59d. This allows the lower part of the mid section panel 41 to be lifted from the Velcro allowing the use of a built in arm rest on the rear seat as shown in Fig 9A.

In order to accommodate different types of folding /split seat, zips are fastened to the sides of the corner panel for the back 36(a, b) joining the cloth panel 42(a, b) shown by the dotted lines in Fig 9A. Different types of folding seats such as 60/40, 40/60, 80/20, 20/80, and 20/80 can also be accommodated by unzipping the zips as required on panels 40 (a, b) and 36(a, b) on the back and 34(a, b) on the seat. As shown in Fig 9C, panels 40(a, b) and panels 34(a, b) can be removed from the primary cover for the seat base and seat back, after undoing the respective zips and panels 37(a, b) can be joined to the midsection panel 41 directly, for the seat back and panel 31 (a, b) can be joined directly to the midsection panel for the seat base, in each case by the respective zips. Accommodating rear vehicle seats for small cars with or without arm rest and different types of folding seats may be effected as mentioned above. As illustrated in Fig 9D the midsection panel 41 for the back and the midsection panel 35 for the seat base can be completely removed by unzipping the midsection panel from the remainder and joining together panel 40a and 40b for the seat back and joining together panel 34a and 34b for the seat base. In this way, the covers are able to accommodate 50/50, 50/80 and 20/80 split/ folding rear seats and back.

Referring again to FIG.9B the midsection panel 35 for the seat base and the midsection panel 41 for the seat back 41 for the seat back is in each case provided with additional tubular piping 71 a and 71 b stitched alongside the edges of the zips. Elastic bungee type cord or similar material is passed through the tubular piping with one end of each length of the cord stitched or fastened to the panel forming loops 72b and 73b and the other end fastened directly to a plastic or metal ring 72a and 73a. When the cover is placed over a vehicle seat, the rings 72a and 73a are fastened together to the loops 72b and 73b behind the back of the seat by means of hooks or other fastening means. This not only allows the tension of the elastic bungee cords to be adjusted by pulling the loops as required but also allows the cover to adjust vertically and at the same time keeps the covers firmly in place, even when the arm rest is in use or the seats have been partly folded. Those skilled in the art will recognise that other fastening material such as Velcro , snaps, buttons or hooks may be used instead of zips at different places to accomplish the invention. It should be noted that the middle panel 35 for the seat base is similar in form to panel 41, but without the Velcro strips 59 and with the zips being stitched directly to the edges of the middle panel 35.

The panels 5a, 5b of the seat back cover of Figures 1 and 2 and the panels 3a, 3b of the seat base cover of Figures 1 and 2 and the panels 36a, 36b of the seat back cover of Figures 6 and 7 and the panels 30a, 30b of the seat base cover of Figures 6 and 7 may, if desired, be provided with contrasting side piping. However, this piping could be partially or wholly eliminated from these parts, if preferred. The above side parts are equipped with contrast side piping.This piping could be partially or wholly eliminated from these parts. These panels may also, if desired, have a backing of plastics foam or some other suitable material. Furthermore, any one or more of these panels could be made as composite panels comprising several, e.g. two or three, sub-panels stitched together.

### HEADREST

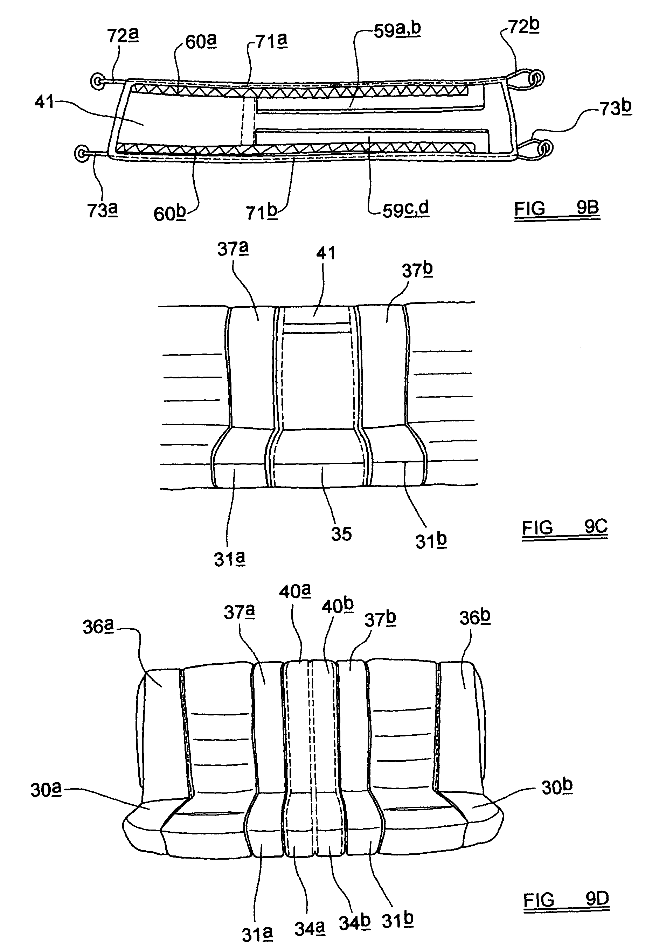

FIG. 10A is a perspective view showing a head rest cover fitted on a vehicle head rest, the cover having panels 62(a, b) facing towards respective sides, side bands 63(a, b) and a removable secondary panel 61. The rear view of the head rest is similar to the front view with the same side bands 63(a, b) and the secondary panel 61 extended to the rear as shown in FIG. 10B

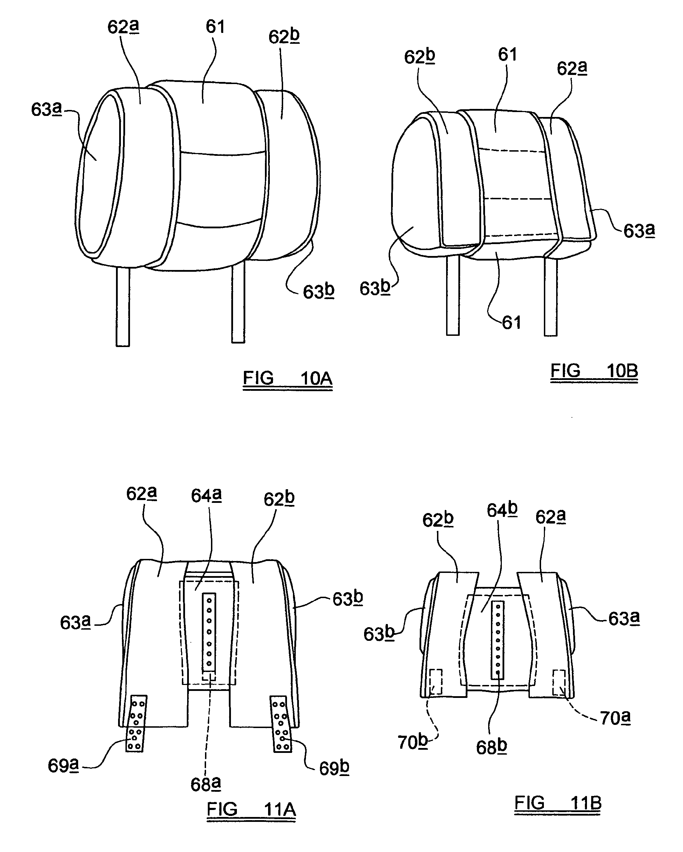

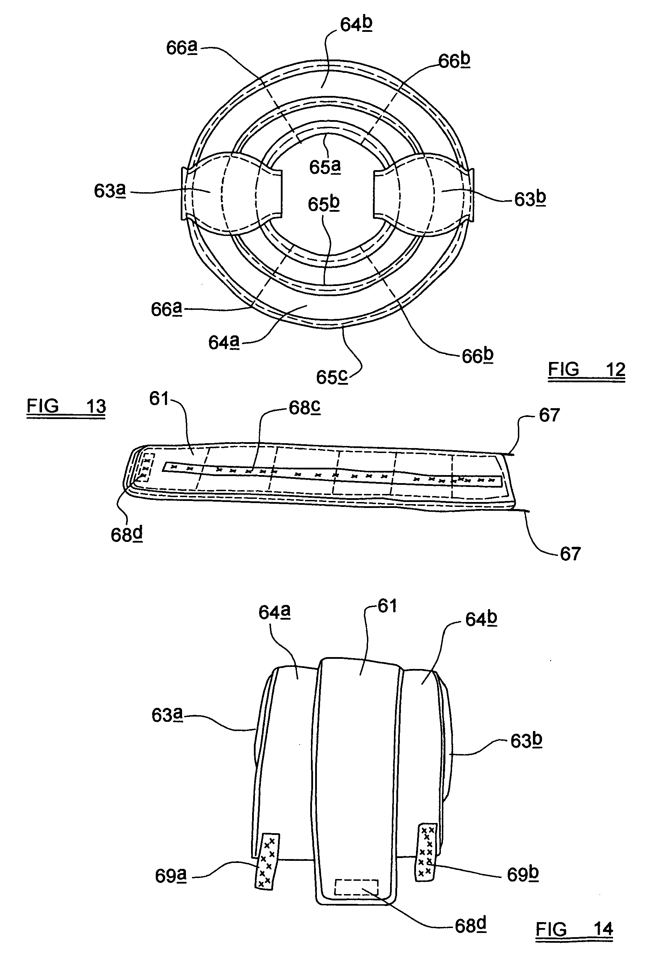

FIG 11A and FIG 11 B show respectively a front and rear view of a car seat head rest fitted with a cover in accordance with the invention, with the secondary middle panel 61 removed in order to reveal the midsection and illustrate the cover's ability to expand and contract horizontally to adjust to fit the vehicle head rest as required. The headrest cover comprises a primary cover, which comprises bottle - shaped end pieces 63a, 63b of leather or similar sheet material connected at front and back of the headrest by cotton cloth panels 64a and 64b. Figure 12 shows this part of the primary cover laid flat, in a condition in which it forms a generally circular or annular frame. The cotton cloth panels 64a and 64b may be approximately 5 inches wide. Tubular piping sections are stitched horizontally (circumferentially as viewed in Figure 12) as shown by the dotted lines in FIG. 12, at the top 65a, centre 65b and bottom 65c of the panels 64a and 64b (as viewed in the fitted condition of the cover). Through these piping sections elastic bungee type cord is passed with the ends of the cord being fastened together with a knot or stopper. This arrangement allows the primary cover, with side panels 64(a, b) to adjust horizontally as required when placed to fit different types of headrest for different types of car. The side panels or bands 64(a, b) of the head rest are attached to the circular frame by stitching at locations 66(a, b) as shown by the dotted lines in FIGS. 1A and 1B and in FIG. 10.

Referring now to FIG. 13 this illustrates the inner surface of the removable secondary middle panel 61 for the head rest. The secondary middle panel 61 is approximately 25 inches in length and has tubular piping stitched along its longitudinal edges through which piping elastic, bungee type, cord 67 is passed (as shown by the dotted lines) with both ends of the cord emerging at the bottom of the panel 61 to allow them to be tied to the pillars of the head rest for a tight fit. In order for the panel 61 to be detachably secured to the circular frame of figure 12, after the latter has been fitted to a headrest, hook pile fabric Velcro 68(a, b) is vertically stitched to the centre of the cloth 64(a, b) to be fastened to the complementary matted fibre Velcro 68c stitched vertically at the centre of the panel 61.

In order to allow the head rest cover to adjust vertically to fit different types and sizes of head rest for different cars, hook pile fabric Velcro strips approximately 5 inches long are stitched vertically facing outwards to the bottom of the side panels 62(a, b), at points 69(a, b) at the front, and complementary matted fibre Velcro strips facing inwards are stitched at points 70(a, b) to the bottom of the side panels 62(a, b), at the rear, whilst a horizontally extending Velcro strip 68d is stitched to the outside of the panel 61, at the end of the latter remote from the emerging ends of cord 67, for engagement with the complementary Velcro strip 68c on the panel 61, (as shown in Fig 11A and Fig 13). This allows the head rest cover, when placed over a vehicle headrest, to adjust vertically as required by allowing the front of the side panels 62(a, b) and secondary panel 61 to overlap under the rear of the side panels and of the panel 61, fastening the front parts of the headrest cover at 69(a, b) and 68d to the rear at strips 70(a, b) and 68c.

It will be understood that many variations are possible from the specific examples described above. For example, the primary webs 1 a, 2a, 42a, 42b, 43a and 43b, 42a,b could be formed in some other way providing the necessary flexibility, (for example some flexible material other than cloth or the like fabric could be used), and these panels may be elasticated in some other way, for example may be formed as panels with elasticated smocking, or the elastication could be eliminated. Indeed, in some cases these primary webs might be partially or wholly eliminated. Furthermore, whilst the primary webs may be tensioned by elastic cords as indicated with reference to Figure 3A, manually adjustable lacing using non-elastic cords may be used instead.

It will also be understood that the covers could be made in any of a wide range of materials, such as various types of leather, Polyurethane, PVC, vinyl, fabric, nylon, plastic, or wire mesh or other suitable materials. Likewise it will be understood that many variations in the design are possible within the scope of the amended claims without eliminating the effectiveness and adaptability of the covers.

The present specification has disclosed a seat cover arrangement that can be used for almost any type of vehicle that requires seating and which is able to adjust to fit larger and medium type seats of a larger motor cars and also to adjust to fit the smaller seats of smaller "compact" cars. The adjustable features and the removable nature of the secondary middle panels of the covers also provides the option for the covers to be reused in different cars, with the ability to mix and match the seat covers to the interior and exterior colours of the car.

In the drawings, and in the above description, the invention is shown applied to seat covers for typical motor car seats. However, it should be understood that seat covers in accordance with the invention can equally well be applied to any other type of seat, for example in other vehicles or in boats, etc.

## Claims

1. An adjustable cover for a seat, such a vehicle seat, or for a seat part, e.g. a seat back or seat base, the cover comprising a plurality of parts of which at least one is relatively flexible or extensible and of which some are parts providing outer finish and which are relatively stiff and inextensible as compared with said extensible part or parts, the cover comprising first and second relatively stiff and inextensible parts in the form of side parts adapted to engage opposite sides of such seat or seat parts and an intermediate portion connected to said first and second side parts, said intermediate portion comprising at least one relatively flexible or extensible part whereby said first and second parts in the absence of constraint can be moved towards and away from one another to an extent accommodate by flexing, folding or extension of said relatively flexible or extensible part or parts of said intermediate portion, the cover comprising at least one secondary panel part, likewise providing outer finish and likewise relatively stiff and inextensible as compared with said flexible or extensible part or parts and which is adapted to fit over and span said, or a respective said, flexible or extensible part and to overlap the adjoining said relatively stiff and inextensible parts, and releasable securing means whereby said secondary panel part can be secured to the relatively inextensible parts on either side of the respective flexible or extensible part or to the regions of the respective flexible or extensible part bordering said relatively inextensible parts, whilst said secondary panel part covers that flexible or extensible part, with any of a plurality of selected extents of overlap of the secondary panel part with respect to the last-noted relatively stiff and inextensible parts, whereby the relatively flexible or extensible part or parts will be covered and concealed and whereby the cover will behave as a substantially inextensible cover of a size determined by the degree of such overlap.

2. An adjustable cover according to Claim 1, wherein the or a said relatively flexible or extensible part is elastically extensible, whereby said first and second side parts can be drawn away from one another against a resilient bias provided by stretching said elastically extensible part, to allow the cover to be fitted to a seat part, such a seat back or base, and whereby said resilient bias will thereafter draw said side parts firmly against opposite sides of said seat part, to fit the latter closely, until the or each said panel part is applied and secured by said releasable securing means.

3. An adjustable cover according to Claim 1 or Claim 2 for an individual seat or for a unit, such as the seat base or seat back, of an individual seat, wherein a single said relatively flexible or extensible part connects said first and second side parts and a single said secondary panel part is provided to span said relatively flexible or extensible part and to be fastened releasably to said first and second side parts by said releasable securing means.

4. A cover according to Claim 1 or Claim 2 for a bench-type seat, such as a rear seat of a motor car, wherein said intermediate portion comprises a plurality of said relatively flexible or extensible parts separated by an intervening relatively extensible part or parts and wherein a respective said panel part is provided for spanning each relatively flexible and extensible part and for releasably securing in selected positions, by such releasable securing means, to the adjoining relatively inextensible parts.

5. An adjustable cover according to Claims 4 wherein said intermediate portion comprises a plurality of said relatively flexible or extensible parts separated by an intervening relatively inextensible part or parts and wherein a respective said secondary panel part is provided for spanning each relatively flexible and extensible part and for releasably securing in selected positions, by such releasable securing means, to the adjoining relatively inextensible parts.

6. An adjustable cover according to any preceding claim wherein the or a said relatively flexible or extensible part comprises thin sheet material or fabric.

7. An adjustable cover according to any preceding claim wherein said first and second side parts have further, relatively stiff, outer finish parts or panels attached thereto by flexible or extensible gusset portions at regions of the cover adapted to extend along the sides of a seat back or base and wherein said first and second side parts are releasably securable to the respective further outer parts or panels at any of a plurality of positions and thus degrees of overlap, with respect to said further relatively stiff outer finish parts or panels, whereby adjustment may be made for a range of different depths of seat back or base, for example.

8. A cover as claimed in any preceding claim wherein said first and second side parts, at least, are connected at regions at or adjacent a periphery of the cover, by a draw cord which can be tightened once the cover has been fitted to the respective seat part the whole said peripheral regions against the edge zones of the seat part concerned and ensure snug fitting.

9. A cover according to any preceding claim, for a seat part, such as a seat back, presenting a front surface, a top and a rear surface and wherein said cover is capable of being fitted to such seat part with said side parts of the cover engaging respective sides of said seat parts and with said flexible or extensible part extending across the front surface of said seat part and wherein said secondary panel part is of a length to allow it to be extended over said relatively flexible or extensible parts at the front of said seat part and over the top of said seat part, onto the rear of said seat part and wherein complementary releasable or fastening means are provided on the rearwardly presented portion of said first and second side parts and on the region of said panel part provided for extending onto the rear of said seat part.

10. A cover arrangement for a seat, such as a motor car seat, having a seat base unit and a seat back unit, the cover arrangement including a seat back cover and seat base cover independent of each other, and each said cover bring in accordance with one or more of the preceding claims.

11. A cover according to Claim 4, wherein said intervening part or parts include at least one section connected with adjoining sections by sliding clasp features or other means allowing such section to be removed and said adjoining sections connected directly, whereby the width of the cover can be further reduced at will.
